Europäisches Patentamt

European Patent Office

Office européen des brevets

(19)

(11) Veröffentlichungsnummer : **0 588 896 B1**

(12) # EUROPÄISCHE PATENTSCHRIFT

(45) Veröffentlichungstag der Patentschrift :
09.11.94 Patentblatt 94/45

(51) Int. Cl.$^5$ : **F16H 61/16,** F16H 61/02,
F16H 61/00

(21) Anmeldenummer : 92912417.0

(22) Anmeldetag : 19.06.92

(86) Internationale Anmeldenummer :
PCT/EP92/01386

(87) Internationale Veröffentlichungsnummer :
WO 93/00535 07.01.93 Gazette 93/02

(54) VERFAHREN ZUR STEUERUNG EINES AUTOMATISCH BETÄTIGTEN GETRIEBES EINES KRAFTFAHRZEUGS.

(30) Priorität : 21.06.91 DE 4120552
21.06.91 DE 4120566

(43) Veröffentlichungstag der Anmeldung :
30.03.94 Patentblatt 94/13

(45) Bekanntmachung des Hinweises auf die
Patenterteilung :
09.11.94 Patentblatt 94/45

(84) Benannte Vertragsstaaten :
DE ES FR GB IT SE

(56) Entgegenhaltungen :
EP-A- 0 142 044
EP-A- 0 260 117
EP-A-00 933 312

(56) Entgegenhaltungen :
DE-A- 3 615 961
DE-A- 3 922 040
DE-A- 3 922 051
JP-A- 2 035 261
JP-A- 2 038 747
US-A- 5 097 725

(73) Patentinhaber : **Dr.Ing.h.c. F. Porsche
Aktiengesellschaft
Porschestrasse 42
D-70435 Stuttgart (DE)**

(72) Erfinder : **SEIDEL, Willi
Theodor-Heuss-Strasse 101
D-7147 Eberdingen-Hochdorf (DE)**
Erfinder : **PETERSMANN, Joseph
Eichenweg 6
D-7251 Wimsheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren nach der Gattung der unabhängigen Ansprüche, wie es aus der EP-A 93 312 bekannt ist.

Übliche automatische Getriebesteuerungen von mit Brennkraftmaschinen angetriebenen Kraftfahrzeugen leiten beim Zurücknehmen des Fahrpedals wegen des geringeren Lastsignales (Drosselklappenöffnungswinkel) bei annähernd gleicher Fahrgeschwindigkeit in der Regel eine Verkleinerung der Übersetzung bzw. eine Hochschaltung ein. Bei Kurvenfahrten oder beim Bremsen ist dies jedoch nicht immer erwünscht, da derartige Lastwechsel unter Umständen zu unsicheren Fahrzuständen führen können, oder beim Wiederbeschleunigen des Kraftfahrzeuges durch verstärktes Gasgeben eine Vergrößerung der Übersetzung bzw. eine Rückschaltung erzwungen werden muß. Dieser Effekt ist unabhängig von der Getriebebauart und tritt sowohl bei Stufengetrieben als auch bei stufenlosen Getrieben auf.

Aus der DE 33 41 652 C2 ist es in diesem und im Zusammenhang mit selbsttätig geschalteten Stufengetrieben bekannt geworden, diese Verkleinerung der Übersetzung (Hochschaltungen) in Kurven durch Erfassen der Querbeschleunigung des Kraftfahrzeuges zu vermeiden. Hierdurch kann jedoch lediglich ein Schalten in Kurven vermieden werden.

Um auch bereits beim Heranfahren an Kurven eine Verkleinerung der Übersetzung gezielt verhindern zu können, wird bei dem Verfahren zur Steuerung eines selbsttätig schaltenden Getriebes nach der DE- 39 22 040 A1 die Fahrpedaländerungsgeschwindigkeit erfaßt und bei Unterschreiten eines bestimmten (negativen) Grenzwerts ein Signal zur Unterbindung eines Hochschaltvorgangs abgeleitet, sofern Schubbetrieb erkannt wird. Daraufhin werden Hochschaltungen unterbunden, bis wiederum Zugbetrieb auftritt und eine festgelegte Zeitspanne verstrichen ist.

In der DE 39 22 051 A1 ist zusätzlich vorgesehen, diese Zeitspanne von einem weiteren Parameter (Fahraktivität) abhängig zu machen, der aus einem oder einer Kombination von mehreren Betriebs- bzw. Fahrparametern eines Kraftfahrzeugs abgeleitet wird und einen Fahrstil eines Fahrers oder eine gerade vorherrschende Verkehrssituation bewertet.

Die EP 00 93 312 A1 zeigt ein Verfahren und eine Vorrichtung zur Einstellung der Übersetzung eines stufenlos verstellbaren Getriebes, bei dem zur Erhöhung der Motorbremswirkung vorgeschlagen wird, bei schneller Zurücknahme des Fahrpedals die Übersetzung für eine bestimmte Zeit konstant zu halten. Wird vor Ablauf dieser Zeit eine Mindestgeschwindigkeit unterschritte, oder die Bremse betätigt oder erreicht die Drosselklappe ihre Leerlaufstellung, so wird die Konstanthaltung abgebrochen.

Ausgehend von diesem Stand der Technik ist es Aufgabe der Erfindung, ein Verfahren zur Steuerung eines automatisch betätigten Getriebes für ein Kraftfahrzeug zu schaffen, das insbesondere bezüglich des Verhaltens vor Kurven und beim Bremsen weiter verbessert wird und das sowohl für Stufengetriebe als auch für stufenlose Getriebe anwendbar ist.

Die Aufgabe wird erfindungsgemäß durch die kennzeichnenden Merkmale der unabhängigen Ansprüche gelöst. Weitere, die Erfindung ausgestaltende Merkmale sind in den Unteransprüchen enthalten.

Die Vorteile der Erfindung sind in erster Linie darin zu sehen, daß ein Verfahren zur Steuerung eines automatisch betätigten stufenlosen Getriebes für ein Kraftfahrzeug geschaffen ist, bei dem das Einstellverhalten vor Kurven und beim Bremsen weiter verbessert ist und das sowohl für Stufengetriebe als auch für stufenlose Getriebe anwendbar ist.

Hierbei wird eine Schubfunktion zur Unterbindung eines Schalt- oder Übersetzungsänderungsvorganges eingeleitet, sobald das Fahrpedal schnell zurückgenommen wird. Diese Schubfunktion wird solange aufrecht erhalten, bis wieder Zugbetrieb erkannt wird und das Fahrzeug beschleunigt. Danach wird eine Haltezeit gestartet, während der die Schubfunktion erneut gestartet wird, sobald das Fahrzeug in Schubbetrieb geht.

Während der Schubfunktion wird die bei Funktionseinleitung eingestellte Übersetzung beibehalten bzw. der bei Funktionseinleitung eingelegte Gang festgehalten. Bei stufenlos einstellbarer Übersetzung kann es alternativ vorgesehen sein, daß die Übersetzung mit einer relativ niedrigen Geschwindigkeit verstellt wird oder so eingestellt wird, daß sich die Motordrehzahl mit niedriger Geschwindigkeit ändert.

Nach Ablauf der Haltezeit wird beim stufenlosen Getriebe die Übersetzung mittels einer Übergangsfunktion an den durch Schaltkennlinien aus den aktuell herrschenden Betriebsbedingungen ermittelten Sollwert angepaßt, um sprunghafte Änderungen zu vermeiden. Die Übergangsfunktion kann beispielsweise ein Filter mit degressiven, linearen oder progressiven Charakter oder ein Verzögerungsglied erster oder zweiter Ordnung sein, und das Zeitverhalten kann frei anpaßbar sein. Wird während der Übergangsfunktion erneut Schubbetrieb erkannt, so wird die Schubfunktion erneut gestartet.

Beim Stufengetriebe wird nach Ablauf der Haltezeit eine Schaltung um einen Gang in Richtung auf einen durch ein Schaltkennfeld vorgegebenen Sollgang freigegeben und die Haltezeit erneut gestartet. Dies wird so lange wiederholt, bis der Sollgang erreicht ist.

Hierdurch wird erreicht, daß kurzzeitiges Gasgeben nicht zur Aufhebung Konstanthaltung oder langsamen Veränderung der Übersetzung führt. Dies kann beispielsweise auftreten, wenn der Fahrer das bei der schnellen Zurücknahme des Fahrpedals auftretenden Motorbremsbremsmoment falsch eingeschätzt hat und dies zu kompensieren versucht.

Diese Schubfunktion kann auch mit einer Rückschaltfunktion eingesetzt werden, die beim Vorliegen unkritischer Bedingungen beim Bremsen eine Rückschaltung bzw. eine Vergrößerung der Übersetzunmg einleitet. Sind diese unkritischen Bedingungen nicht mehr alle erfüllt, wird die erfindungsgemäße Schubfunktion aufgerufen.

Die Einhaltung der unkritischen Bedingungen gewährleistet dabei einen sicheren Betrieb des Kraftfahrzeugs. So wird insbesondere überwacht, daß die Querbeschleunigung nicht zu hoch ist, das Fahrzeug nicht zu stark verzögert und die Fahrgeschwindigkeit nicht zu hoch ist, um einen Verlust insbesondere der Längs- und Seitenführungskräfte der Räder des Kraftfahrzeugs zu vermeiden. Das sich nach einer Vergrößerung der Übersetzung bzw. eine Rückschaltung verstärkt auf die Antriebsräder auswirkende Bremsmoment der Antriebs- (Brennkraft-) Maschine kann sich daher nicht negativ auf das Fahrverhalten des Kraftfahrzeugs auswirken.

Durch das Vergrößern der Übersetzung bzw. eine Rückschaltung beim Bremsen wird einerseits die Bremswirkung der Antriebsmaschine des Kraftfahrzeugs im Schubbetrieb verstärkt, so daß die Bremse (Betriebsbremse) des Kraftfahrzeugs entlastet wird. Andererseits wird im Zusammenhang mit einer Festhaltung oder langsamen Veränderung der Übersetzung vor, in und nach Kurven erreicht, daß dem Fahrer nach Durchfahren einer Kurve immer die für ein Wiederbeschleunigen des Kraftfahrzeugs optimale Übersetzung beziehungsweise Motordrehzahl zur Verfügung steht.

Zur Verhinderung von Fahrzeuginstabilität durch übermäßigen Schlupf an der Antriebsachse wird die Schubfunktion bei auftretendem Schlupf durch eine Schlupfüberwachunmgsfunktion ausgesetzt oder abgebrochen, die stattdessen die Übersetzung vergrößert bzw. eine stufenweise Hochschaltung eingeleitet, bis der Schlupf im zulässigen Bereich liegt. Wenn eine dann gestartete Haltezeit abgelaufen ist und Zugbetrieb herrscht und das Fahrzeug beschleunigt endet die Schlupfüberwachungsfunktion.

Die Erfindung wird nachstehend anhand der in den Zeichnungen dargestellten Ausführungsformen erläutert.

Es zeigt:

Fig. 1   ein Blockschaltbild einer elektro-hydraulischen Steuerung für ein stufenloses Getriebe eines Kraftfahrzeuges,

Fig. 2   eine Schar von mehreren Steuerkennlinien, die Werten des Drosselklappenwinkels bestimmte Werte von Motordrehzahl- Sollwerten zuordnen,

Fig. 3   eine Grenzkennlinie zur Erkennung von Zug-/Schubbetrieb,

Fig. 4   eine erste und eine zweite fahrgeschwindigkeitsabhängige Grenzkennlinie für eine Querbeschleunigung,

Fig. 5   ein Kennfeld für einen motordrehzahl- und übersetzungsabhängigen Kennfeldwert

Fig. 6   ein Kennfeld für einen übersetzungs- und fahraktivitätsabhängigen Faktor und

Fig. 7   eine Kennlinie, die die Abhängigkeit von Haltezeiten von einer Fahraktivität zeigt.

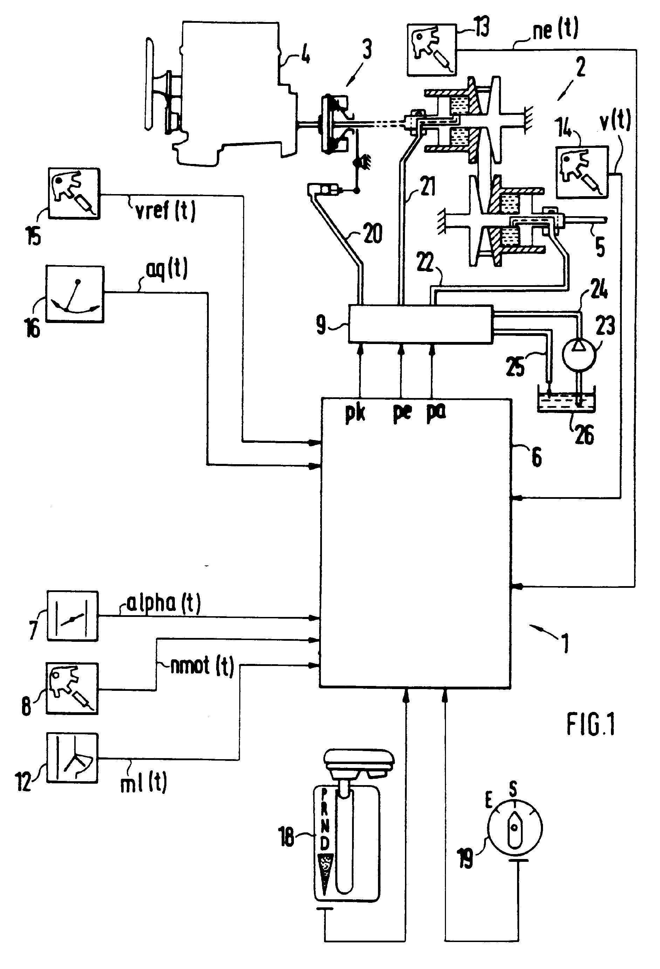

In **Fig. 1** ist mit 1 eine Steuerung eines elektro-hydraulisch betätigten stufenlosen Getriebes 2 am Beispiel eines Umschlingungsgetriebes gezeigt. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Nachfolgend sind Signale, die sich mit der Zeit t ändern, als Funktionen f(t) der Zeit dargestellt.

Ein Steuergerät 6 steuert wenigstens in Abhängigkeit von der - ohne Beschränkung der Allgemeinheit - Drosselklappenstellung alpha(t) eines Drosselklappenwinkelgebers 7 und des Istwertes einer Motordrehzahl nmot(t) eines Motordrehzahlgebers 8 der Brennkraftmaschine 4 einen Hydraulik-Ventilblock 9 an. Selbstverständlich kann anstatt der Stellung der Drosselklappe auch die Stellung eines jeden, die Antriebsleistung einer Antriebsmaschine des Kraftfahrzeugs beeinflussenden Organs, wie z. B. eines Fahrpedals oder eines Einspritzpumpenhebels einer selbstzündenden Diesel-Brennkraftmaschine oder das Ausgangssignal eines elektrischen oder elektronischen Fahrpedals erfaßt und verarbeitet werden.

Zur Steuerung des stufenlosen Getriebes 2 und der Anfahrkupplung 3 erhält das Steuergerät 6 als weitere Eingangsgrößen oder Meßgrößen die der Brennkraftmaschine zugeführte Luftmenge bzw. Luftmasse ml(t) eines Luftmengen- bzw. Luftmassengebers 12 sowie die Getriebeeingangsdrehzahl ne(t) eines Getriebeeingangsdrehzahlgebers 13 und eine Fahrgeschwindigkeit v(t) eines Fahrgeschwindigkeitgebers 14 des Kraftfahrzeugs. Zusätzlich werden eine Geschwindigkeit vref(t) eines Referenzgeschwindigkeitgebers 15 an einer nicht angetriebenen Fahrzeugachse und eine Querbeschleunigung aq(t) eines Querbeschleunigungsgebers 16 erfaßt und vom Steuergerät 6 verarbeitet.

3

Schließlich ist die Steuerung üblicherweise vom Fahrzeugführer über einen Wählhebel 18 zur Vorwahl von Fahrstufen: P (Parksperre), R (Rückwärtsgangstufe), N (Leergangstufe) und D (selbstätige Einstellung des Übersetzungsverhältnisses ue des stufenlosen Getriebes) beeinflußbar; ferner ist ein Einstellbereich des Wählhebels 18 zur direkten Vorgabe des Übersetzungsverhältnisses ue vorgesehen.

Bei üblichen Getriebesteuerungen wird schließlich über einen Programmwählschalter 19 die Steuerkennlinie, nach der das Steuergerät 1 in der Fahrstufe D das stufenlose Getriebe steuert, ausgewählt. Es sind hierbei in der Regel zwei Steuerkennlinien auswählbar, wobei in der Stellung E eine verbrauchsoptimierte Steuerkennlinie RKL1 und in der Stellung S eine leistungsoptimierte Steuerkennlinie RKL5 manuell einstellbar sind.

Alternativ zum Programmwählschalter 19 kann auch im Steuergerät 6 vorteilhafterweise ein Steuerverfahren implementiert sein, das beispielsweise entsprechend der DE 33 48 652 C2 oder der DE 39 22 051 A1 den Fahrstil eines Fahrers oder dessen verkehrssituationsbedingtes Handeln in Bezug auf die Steuerung des Kraftfahrzeugs bewertet und eine Fahraktivität SK(t) (Fahrpedalaktivität) aus einer oder mehreren Betriebs- bzw. Fahrparametern ableitet. Auf der Basis dieser Fahraktivität SK(t) wird dann, entsprechend einer Schaltstellung des Programmwählschalters 19, eine von mehreren Steuerkennlinien RKLj=f(SK(t)); (j=1, 2, ..., 5), im folgenden mit RKL(SK) bezeichnet, zur Steuerung des stufenlosen Getriebes bzw. der Anfahrkupplung 3 herangezogen.

In Abhängigkeit von den genannten Größen steuert das Steuergerät 6 über einen Signalausgang pk und den Ventilblock 9 den Hydraulikdruck in der Anfahrkupplung 3 sowie über die Signalausgänge pe und pa und den Hydraulikventilblock 9 das Übersetzungsverhältnis ue an. Das Übersetzungsverhältnis ue(t) ist hierbei proportional zum Quotienten aus der Getriebeeingangsdrehzahl ne(t) und der Fahrgeschwindigkeit v(t): ue(t)-prop*(ne(t)/v(t)); prop ist hierbei ein Proportionalfaktor.

Es bedeuten dabei hier und im folgenden:
- einer Hochschaltung bei einem Stufengetriebe entspricht eine Verkleinerung der Übersetzung ue oder eine Verringerung der Motordrehzahl nmot(t) und
- einer Rückschaltung bei einem Stufengetriebe entspricht eine Vergrößerung der Übersetzung ue oder eine Erhöhung der Motordrehzahl nmot(t).

Der Hydraulikventilblock 9 verbindet hierzu die entsprechenden Steuerleitungen 20, 21 und 22 der Anfahrkupplung 3 und des stufenlosen Getriebes 2 mit einer an eine Pumpe 23 angeschlossenen Druckleitung 24 oder eine Rücklaufleitung 25 zu einem Vorratsbehälter 26 für Hydraulikflüssigkeit.

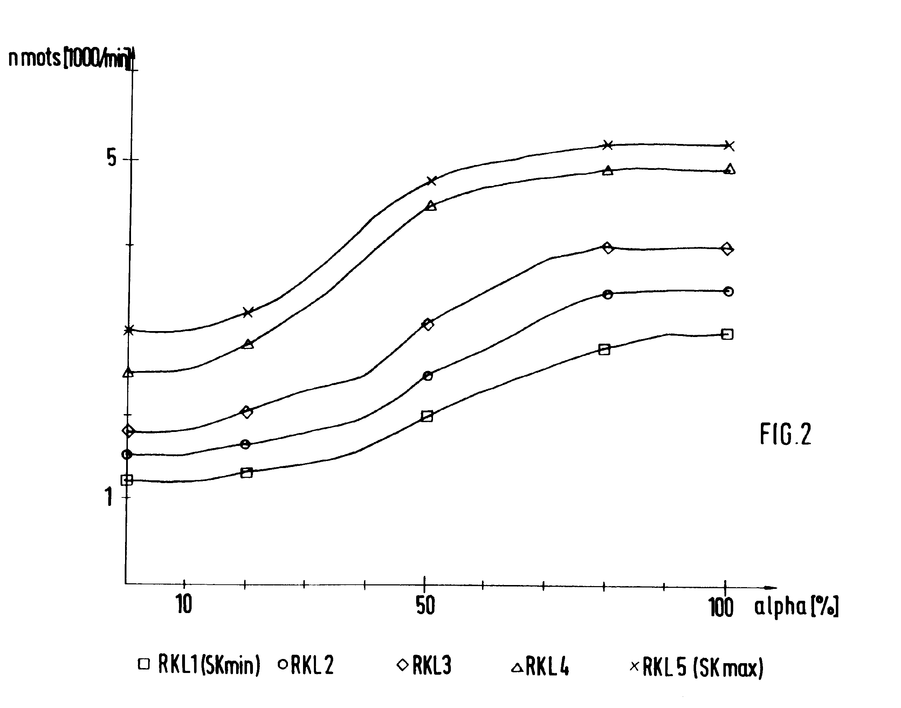

Zur Steuerung des stufenlosen Getriebes 2 wird die Übersetzung ue des Getriebes mittelbar über das Steuergerät 6 und den Ventilblock 9 über Steuerkennlinien RKL(SK) wenigstens in Abhängigkeit von der Drosselklappenstellung alpha(t) und der Motordrehzahl n(t) selbsttätig eingestellt; die Steuerkennlinie RKL(SK) wird hierbei entsprechend der Schalterstellung des Programmwählschalters 19 oder der den Fahrstil des Fahrers oder dessen verkehrssituationsbedingtes Handeln in Bezug auf die Steuerung des Kraftfahrzeugs bewertenden Fahraktivität SK(t) aus einer Schar von mehreren Steuerkennlinien RKL(SK) (j=1, 2, ..., 5) entsprechend **Fig. 2** ausgewählt.

Ohne Beschränkung der Allgemeinheit können auch andere Größen zur Steuerung des stufenlosen Getriebes herangezogen werden oder die Steuerkennlinien zu Kennlinienfeldern oder Kennfeldern erweitert werden.

Die in der **Fig. 2** gezeigten Steuerkennlinien decken hierbei den Bereich zwischen einer Steuerkennlinie RKL1, die einen verbrauchsoptimierten Betrieb des Fahrzeugs ermöglicht (Stellung "E" des Programmwählschalters), und einer Steuerkennlinie RKL5, mit welcher das Kraftfahrzeug leistungsoptimiert betrieben werden kann (Stellung "S" des Programmwählschalters 19), zumindest schrittweise ab.

Sofern die Steuerung die Auswahl der Steuerkennlinien RKL(SK) entsprechend der Fahraktivität SK(t) vornimmt, stellt sich die Steuerung des stufenlosen Getriebes 2 selbsttätig auf die Fahrweise des Fahrers ein, so daß ein manueller Eingriff bzw. eine Umstellung der Steuerkennlinien nicht vorgenommen werden muß.

Die Übersetzung ue des stufenlosen Getriebes 2 wird durch das Steuergerät 6 bevorzugt derart eingestellt, daß die Motordrehzahl nmot(t) einem Motordrehzahl-Sollwert nmots möglichst optimal nachgeführt wird. Hierzu kann im Steuergerät 6 ein unterlagerter Drehzahlregler implementiert sein. Die Übersetzung ue ist somit eine Funktion des Motordrehzahl-Sollwerts nmots, der Motordrehzahl nmot und der Zeit t: ue=f(nmots, nmot, t). Eine Abweichung Dnmot(t)=nmots(t)-nmot(t) der Motordrehzahl nmot(t) vom MotordrehzahlSollwert nmots(t) wird gegen 0 geführt.

Der augenblickliche Wert des Motordrehzahl- Sollwerts nmots wird hierbei über die der augenblicklichen Fahraktivität SK(t) zugeordnete Steuerkennlinie RKL(SK) gemäß **Fig. 2** aus dem augenblicklichen Wert der Drosselklappenstellung alpha(t) ermittelt: nmots=RKL(SK)(alpha, SK).

Wie der **Fig. 2** zu entnehmen ist, weisen die Steuerkennlinien RKL(SK) im wesentlichen in einem unteren Wertebereich der Drosselklappenstellung alpha einen progressiven Verlauf auf, der in einem mittleren Bereich der Drosselklappenstellung alpha in einen degressiven Verlauf übergeht. Die Drosselklappenstellung alpha ist auf der horizontalen Achse in Prozent aufgetragen, wobei der Wert 0 % der geschlossenen Drosselklappe, d.h. der Leerlaufstellung, und der Wert 100 % der voll geöffneten Drosselklappe entspricht.

Es sind fünf Steuerkennlinien RKL1, RKL2, RKL3, RKL4 und RKL5 eingetragen, wobei die Steuerkennlinie RKL1 den verbrauchsoptimierten Betrieb des Kraftfahrzeugs ermöglicht und bei minimaler Fahraktivität SK(t)=SKmin angewählt wird. Die Steuerkennlinie RKL5 wird bei maximaler Fahraktivität SK(t)=SKmax ausgewählt, bei der der leistungsoptimierte Betrieb des Kraftfahrzeugs möglich ist.

Entsprechend der DE 33 41 652 C2 oder der DE 39 22 051 A1 wird die Fahraktivität SK(t) durch einen den Fahrstil des Fahrers oder dessen verkehrssituationsbedingtes Handeln längerfristig bewertenden funktionellen Zusammenhang aus zyklisch oder antizyklisch erfaßten aktuellen und vergangenen Werten einer einzigen Betriebskenngröße oder zu einer einzigen aus mehreren Betriebsgrößen eines Kraftfahrzeugs zusammengesetzten Größe ermittelt.

Hierzu werden beispielsweise Werte der Drosselklappenstellung alpha(t), der Fahrgeschwindigkeit v(t) und der Querbeschleunigung aq(t) im Millisekundenbereich erfaßt und daraus weitere Werte, wie z.B. die Drosselklappenänderungsgeschwindigkeit dalpha(t)/dt und die Beschleunigung/Verzögerung des Fahrzeugs dv(t)/dt berechnet. Die ermittelten und berechneten Werte werden über Kennfelder mit weiteren Betriebsgrößen verknüpft und über einen funktionellen Zusammenhang zu einer Zwischengröße zusammengesetzt, aus der durch gleitende Mittelwertbildung, die sowohl die neu berechneten Werte als auch die vergangenen Werte längerfristig berücksichtigt, eine Fahraktivität SK(t) ermittelt.

Über einen weiteren funktionellen Zusammenhang wird dieser Fahraktivität SK(t) schließlich, z.B. entsprechend der in der DE 39 22 051 A1 gezeigten Weise, eine Steuerkennlinie RKL(SK) zugeordnet.

Eine rasche Schubphase kann, wie schon in der DE- 39 22 040 A1 und der DE-39 22 051 A1 gezeigt, erkannt werden, indem die zeitliche Änderung der Drosselklappenstellung dalpha(t)/dt abtastet wird. In der Regel nimmt nämlich hierbei ein Fahrer, z.B. vor einer Kurve, das Fahrpedal - und hiermit in der Regel auch die Drosselklappe - schneller zurück als er es unter normalen Umständen tut, um beispielsweise die Fahrgeschwindigkeit anzupassen.

Hierdurch wird eine Schubfunktion eingeleitet, während der die zum Zeitpunkt der Funktionseinleitung eingestellte Übersetzung festgehalten wird.

Die Schubfunktion endet, wenn das Fahrzeug in Zugbetrieb geht und beschleunigt wird und eine bei Vorliegen dieser beiden Bedingungen gestartete Haltezeit T1 abgelaufen ist. Wird innerhalb dieser Haltezeit T1 Schubbetrieb des Fahrzeuges erkannt, wird die Schubfunktion erneut ausgelöst.

Nach Beendigung der Schubfunktion erfolgt eine Anpassung der Übersetzung ue so, daß der in der augenblicklich eingestellten Steuerkennlinie RKL(SK) im augenblicklichen Betriebspunkt des Kraftfahrzeuges (alpha(t), v(t), nmot(t), t) vorgesehene Motordrehzahl-Sollwert nmots(t) erreicht wird. Wird während der Anpassung Schubbetrieb des Fahrzeuges erkannt, wird die Schubfunktion erneut ausgelöst.

Zur Identifikation der Schubphase wird die zeitliche Änderung der Drosselklappenstellung mit einem Grenzwert verglichen, der seinerseits von der Fahraktivität abhängig sein kann: dalpha(t)/dt < dalpha,grenz(SK). Durch die Abhängigkeit von der Fahraktivität wird berücksichtigt, daß die zeitliche Änderung der Drosselklappe im Mittel bei leistungsoptimierter Fahrweise, entsprechend SK=5, größer ist als bei verbrauchsoptimierter Fahrweise, entsprechend SK=0.

Zur Beurteilung, ob das Fahrzeug beschleunigt, wird aus der Geschwindigkeit vref(t) eine Längsbeschleunigung al(t) = dvref(t)/dt gebildet und verglichen, ob diese größer Null ist: al(t) > 0 m/s².

Die Haltezeit T1 ist im wesentlichen abhängig von der Fahraktivität SK(t) gewählt, sie kann aber darüber hinaus auch von der eingestellten Übersetzung abhängig sein: T1 = f(SK(t), ue(t)).

Bei den Begriffen Zugbetrieb und Schubbetrieb kommt es auf das betrachtete System an. Hierbei kann unterschieden werden:

- Gesamtsystem Kraftfahrzeug: Unter Zugbetrieb ist die Beschleunigung des Kraftfahrzeuges (zeitliche Änderung der Fahrgeschwindigkeit) dv(t)/dt>0 zu verstehen, während der Schubbetrieb einer Verzögerung des Kraftfahrzeugs entspricht dv(t)/dt<0.

- System Kupplung/Getriebe: Bei Zugbetrieb ist die Eingangsdrehzahl des Systems Kupplung (Drehmomentwandler)/Getriebe größer als dessen Ausgangsdrehzahl, während bei Schubbetrieb die Eingangsdrehzahl kleiner als die Ausgangsdrehzahl ist.

- System Brennkraftmaschine: Zugbetrieb bedeutet Drosselklappenstellung alpha(t)>0 und zeitliche Änderung der Motordrehzahl dnmot(t)/dt>0, während im Schubbetrieb die Drosselklappenstellung alpha(t)=0 oder die zeitliche Änderung der Motordrehzahl dnmot(t)/dt<0 ist.

Bei der Getriebesteuerung und damit auch dem Gesamtverhalten des Kraftfahrzeugs hat es sich als sinnvoll erwiesen, die Begriffe Zugbetrieb und Schubbetrieb folgendermaßen nachzubilden:

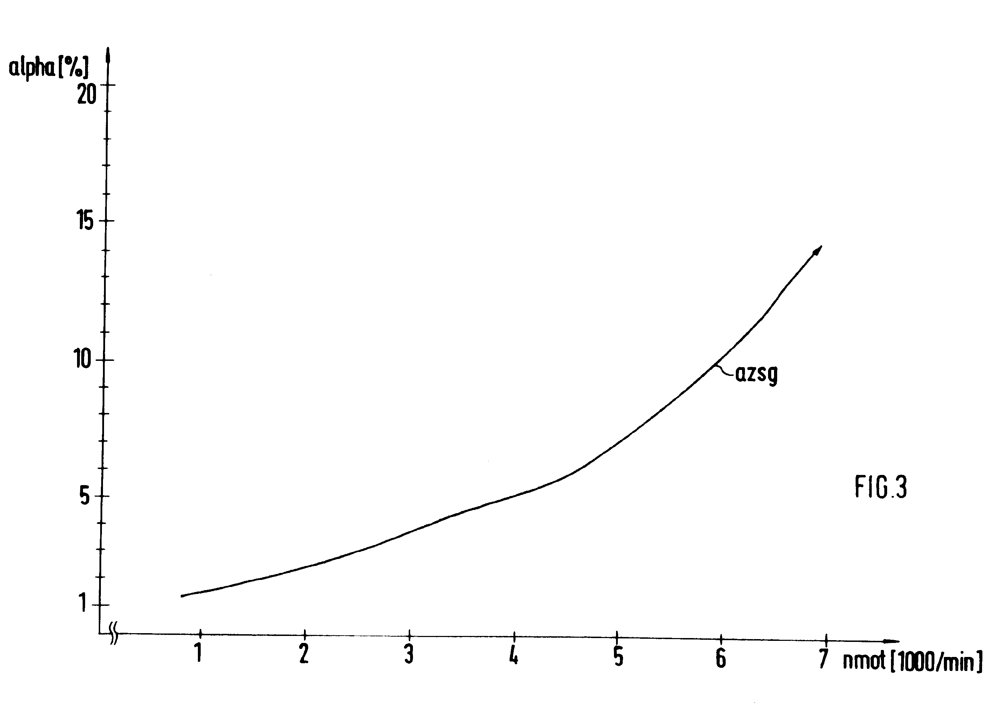

- Schubbetrieb wird erkannt, wenn die Drosselklappenstellung alpha(t) unter eine motordrehzahlabhängige Grenzkennlinie azsg(nmot), wie sie in **Fig. 3** gezeigt ist, fällt: alpha(t)<azsg(nmot).

- Zugbetrieb wird erkannt, wenn sowohl die Drosselklappenstellung alpha(t) die motordrehzahlabhängige Grenzkennlinie azsg(nmot) nach **Fig. 3** überschreitet, als auch die zeitliche Änderung der Fahrgeschwindigkeit dv(t)/dt positive Werte annimmt: (alpha(t)>azsg(nmot) und dv(t)/dt>0).

Die Anpassung der Motordrehzahl nmot(t) an den Motordrehzahl-Sollwert nmots(t) durch eine Übergangsfunktion, mit der eine sprunghafte Änderung der Motordrehzahl nmot(t) vermieden wird. Die Übergangsfunktion kann ein lineares, ein degressives oder ein progressives Filter sein, jedoch auch die Form eines Verzögerungsgliedes erster oder zweiter Ordnung annehmen. Die Parameter der Übergangsfunktion werden abhängig von der Fahraktivität gewählt. Die Übergangsfunktion endet, wenn die Abweichung der Motordrehzahl nmot(t) vom Motordrehzahl-Sollwert nmots(t) unter einer vorgegebenen Schwelle liegt.

Unter bestimmten unkritischen Bedingungen ist es ferner zur Steigerung der Motorbremswirkung vorgesehen, eine Vergrößerung der Übersetzung ue (entsprechend einer Rückschaltung) um eine durch ein Kennfeld vorgegebene, von der Fahraktivität und der Fahrzeugverzögerung abhängige Übersetzungsänderung vorzunehmen.

Hierzu muß sowohl

a) das Fahrzeug im Schubbetrieb sein
<u>und</u>

b) eine mittels des Querbeschleunigungssensors 17 erfaßte Querbeschleunigung aq(t) unterhalb einer bestimmten ersten fahrgeschwindigkeitsabhängigen Querbeschleunigungs- Grenzlinie aqgl(v(t)) liegen:

$$aq(t)<aqg1(v(t),$$

<u>und</u>

c) die zeitliche Änderung der Fahrgeschwindigkeit dv(t))/dt kleiner als ein zweiter negativer Längsbeschleunigungs-Grenzwert albbg(nmot, ue, SK(t), t)=k(ue, SK(t))*albg(ue, nmot, t) sein:

$$dv(t)/dt > albbg(nmot, ue,SK(t), t),$$

<u>und</u>

d) die Fahrgeschwindigkeit v(t) unterhalb eines Fahrgeschwindigkeits-Grenzwerts vg(ue, SK(t)) liegen:

$$v(t)<vg(ue, SK(t)).$$

Sind diese Bedingungen nicht mehr erfüllt, so wird die Schubfunktion aktiviert.

Zu den Bedingungen im einzelnen:

zu a): Der erste negative Längsbeschleunigungs- Grenzwert albg(ue, nmot, t) ist von den augenblicklichen Werten der Übersetzung ue und der Motordrehzahl nmot(t) abhängig und entspricht hierbei der jeweiligen (negativen) Längsbeschleunigung dv/dt (und damit der Verzögerung) des in definiertem Zustand (Beladung, Reifenluftdruck, Umweltbedingungen usw.) auf ebener Fahrbahn rollenden Kraftfahrzeugs bei geschlossener Drosselklappe alpha=0, bei den jeweiligen Wertepaaren der augenblicklich eingestellten Übersetzung ue und der Motordrehzahl nmot(t).

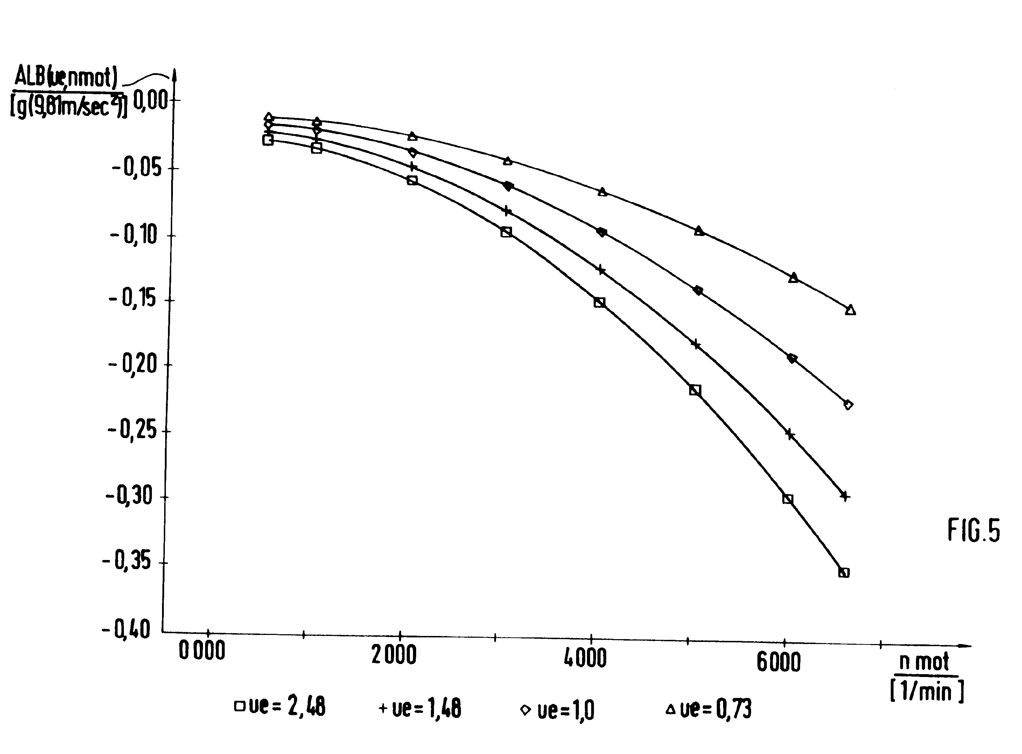

Der erste negative Längsbeschleunigungs- Grenzwert albg(ue, nmot, t) wird aus den Augenblickswerten dieser Größen bevorzugt über ein erstes Kennfeld ALB(ue, nmot) ermittelt: albg(ue, nmot, t)=ALB(ue, nmot). Ein Beispiel für ein derartiges erstes Kennfeld ALB(ue, nmot) ist in **Fig. 5** abgebildet. Hierin sind beispielhaft vier übersetzungsabhängige Kennlinien, die bestimmten Werten der Motordrehzahl nmot (in Umdrehungen pro Minute) bestimmte Kennfeldwerte ALB(ue, nmot) in der Einheit g, entsprechend 9,81... Meter pro Sekunde (Erdbeschleunigung), zuweisen, dargestellt.

Als Übersetzungen sind die Werte 2,48 - 1,48 - 1,0 - 0,73 aufgetragen. Zur Ermittlung von Kennfeldwerten des -fahrzeugspezifischen- Kennfelds, die von den dargestellten (Übersetzungs-) Kennlinien abweichen, kann in bekannter Weise entweder übersetzungsabhängig interpoliert oder extrapoliert werden. Alternativ hierzu kann selbstverständlich die Ermittlung der Längsbeschleunigungs- Grenzwerte albg(g, nmot, t) auch über einen entsprechenden funktionellen Zusammenhang erfolgen.

Die Kennlinien nach **Fig. 5** zeigen deutlich die Abhängigkeit der Verzögerungswerte eines Kraftfahrzeugs mit Brennkraftmaschine von der Übersetzung ue und der Motordrehzahl nmot(t). Für wachsende Werte der Motordrehzahl nmot(t) werden die Verzögerungswerte größer durch die sich verstärkende Motorbremswirkung und den sich erhöhenden Rollwiderstand und Luftwiderstand des Fahrzeugs. Ebenso steigen die Verzögerungswerte mit größer werdender Übersetzung ue, da sich das Bremsmoment der Brennkraftmaschine aufgrund der höheren Übersetzung verstärkt auf die Verzögerungsrate des Kraftfahrzeugs auswirkt.

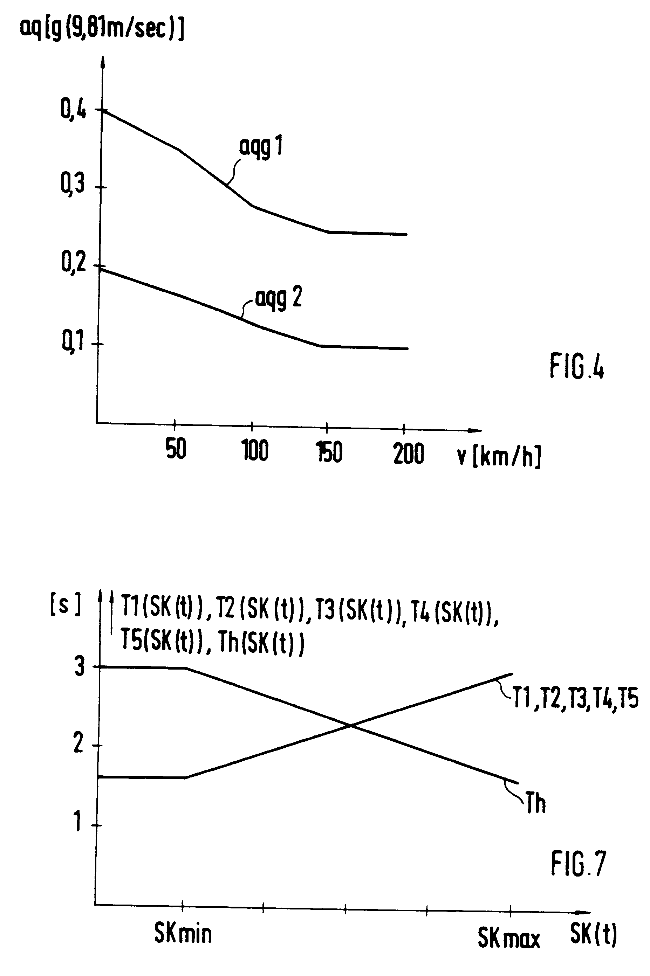

zu b): Die erste Querbeschleunigungs- Grenzlinie aqg1(v(t)) ist hierbei vorzugsweise fahrgeschwindigkeitsabhängig. Eine entsprechende Kennlinie ist in **Fig. 4** dargestellt. Sie berücksichtigt, daß die Übersetzung ue nur dann vergrößert wird, wenn die Querbeschleunigung des Kraftfahrzeugs nicht zu hoch ist.

Durch Prüfen, ob die Querbeschleunigung aq(t) unterhalb der ersten bestimmten Querbeschleunigungs- Grenzlinie aqg1(v(t)) liegt, wird überwacht, ob sich das Fahrzeug nicht bereits in einer - relativ engen oder schnell befahrenen - Kurve befindet. Liegt bereits eine derartige Kurvenfahrt vor, so wird die Vergrößerung der Übersetzung (entsprechend einer Rückschaltung) unterbunden, damit nicht durch die sich sonst erhöhende Bremswirkung der Kraftschluß zwischen Rad und Fahrbahn verloren geht.

zu c): Der zweite negative Längsbeschleunigungs- Grenzwert albbg(nmot, ue, SK(t))= =k(ue, SK(t))- *albg(ue, nmot, t) wird gemäß einem Produkt aus einem übersetzungsabhängigen Faktor k(ue, SK(t)) und einem bei den augenblicklichen Betriebsbedingungen des Kraftfahrzeugs bestimmten Wert des ersten negativen Längsbeschleunigungs- Grenzwerts albg(ue, nmot, t) ermittelt.

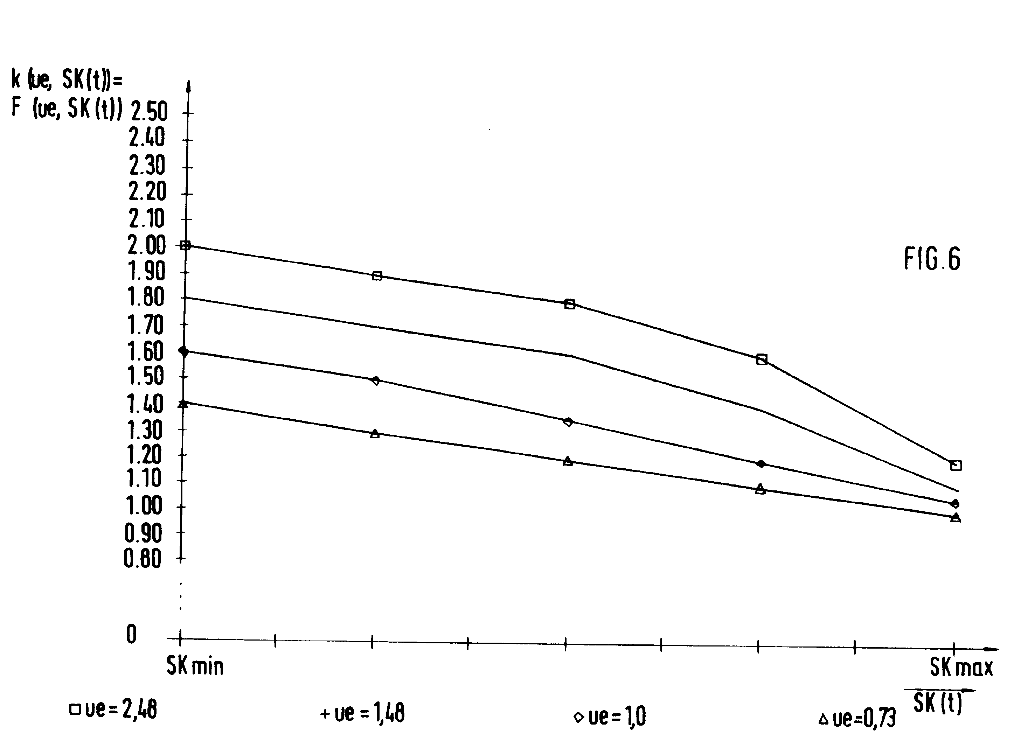

Der übersetzungsabhängige Faktor k(ue, SK(t)) wird über ein zweites Kennfeld k(ue, SK(t))=F(ue, SK(t)) aus der augenblicklichen Übersetzung ue ermittelt. Ein Beispiel für das zweite Kennfeld ist der **Fig. 6** zu entnehmen. Hierbei weisen wiederum übersetzungsabhängige Kennlinien (Übersetzungswerte 2,48 - 1,48 - 1,0 - 0,73) Werten der Fahraktivität SK(t) dimensionslose Werte des Faktors k(ue, SK(t)) zu; die für hiervon abweichende Werte der Übersetzung ue gültigen Kennfeldwerte können wiederum durch Interpolation beziehungsweise Extrapolation aus den vorhandenen Werten errechnet werden.

Die Überwachung des Überschreitens des zweiten negativen Längsbeschleunigungs- Grenzwerts albbg(nmot, g, SK(t)), d.h. einer zweiten Mindest-Fahrzeugverzögerung, stellt eine Sicherheitsfunktion dar: Hierbei wird ermittelt, ob die durch die Vergrößerung der Übersetzung ue (entsprechend einer Rückschaltung) zu erwartende höhere Verzögerung des Kraftfahrzeugs nicht zu einem Überschreiten der Haftreibungsgrenze der Räder führen würde.

Hierzu wird aus der beim augenblicklichen Fahrzustand zu erwartenden Verzögerung durch Gewichtung (Multiplikation) mit dem übersetzungsabhängigen Faktor k(ue, SK(t)) eine augenblicklich maximal zulässige Verzögerung ermittelt und diese mit der augenblicklichen Fahrzeugverzögerung dv(t)/dt verglichen; ist die augenblickliche Verzögerung höher, wird eine Vergrößerung der Übersetzung (entsprechend einer Rückschaltung) unterbunden.

Der übersetzungsabhängige Faktor k(ue, SK(t)) berücksichtigt hierbei, daß der zweite negative Längsbeschleunigungs- (Fahrzeugverzögerungs-) Grenzwert albbg (ue, nmot, t) kleiner als der erste negative LängsbeschleunigungsGrenzwert albg(ue, nmot, t), also betragsmäßig größer (entsprechend einer höheren Verzögerungsrate) sein muß.

zu d): Der Fahrgeschwindigkeits- Grenzwert vg(ue, SK(t), t) hängt von der Übersetzung ue und der Fahraktivität SK(t) ab.

Mit der Überwachung des Überschreitens des übersetzungsabhängigen Fahrgeschwindigkeits- Grenzwerts vg(ue, SK(t), t) können weitere Sicherheitskriterien bezüglich einer Vergrößerung der Übersetzung (entsprechend einer Rückschaltung) bei zu hoher Fahrgeschwindigkeit oder das Verhindern des Überschreitens von Drehzahlgrenzen der antreibenden Brennkraftmaschine nach Erhöhen der Übersetzung erfüllt werden. Diese Sicherheitskriterien sind stark fahrzeugspezifisch und müssen daher individuell an jedes Fahrzeug angepaßt werden, so daß sich die Darstellung eines entsprechenden Kennfelds erübrigt.

Um auch nach dem Heranfahren an Kurven oder dem Anbremsen vor Kurven eine ungewollte Verstellung der Übersetzung ue während der Kurvenfahrt zu vermeiden, wird die Querbeschleunigung des Fahrzeugs überwacht. Die Übersetzung ue wird festgehalten, solange der Betrag der Querbeschleunigung |aq(t)| oberhalb einer von der Fahrgeschwindigkeit v(t) abhängigen zweiten und niedrigeren Querbeschleunigungs- Grenzlinie aqg2(v(t)) nach **Fig. 4** liegt bzw. solange nach Unterschreiten der zweiten Querbeschleunigungs- Grenzlinie aqg2(v(t)) eine Haltezeit T2(SK(t)) noch nicht verstrichen ist. Wird während der Haltezeit T2(SK(t)) die Querbeschleunigungs-Grenzlinie aqg2(v(t)) erneut überschritten, so wird die Funktion neu gestartet. Wird nach Ablauf der Haltezeit T2(SK(t)) Zugbetrieb erkannt und beschleunigt das Fahrzeug, so wird die Übersetzung noch für eine weitere Zeit T3(SK(t)) festgehalten. Ist dies nicht der Fall oder die Haltezeit T3(SK(t)) abgelaufen, so erfolgt eine Anpassung der Motordrehzahl nmot(t) an den Motordrehzahl-Sollwert nmots(t) mittels einer Übergangsfunktion in der oben beschriebenen Weise.

Übergeordnet verhindert eine Schlupfüberwachungsfunktion mögliche Fahrzeuginstabilität durch übermäßigen Schlupf an der Antriebsachse indem die Übersetzung vergrößert wird um das an der Antriebsachse wirkende Moment zu verringern. Diese Funktion kann die bisher genannten Funktionen abbrechen oder verhindern.

Die Schlupfüberwachungsfunktion wird ausgelöst wenn die Differenz Dv(t) zwischen einer Geschwindigkeit vref(t) einer nicht angetriebenen Achse und der an einer angetriebenen Achse erfaßten Fahrgeschwindigkeit v(t) einen ersten, zulässigen Differenzgeschwindigkeitswert Dvzull(SK(t)) überschreitet: Dv(t) > Dvzul1(SK(t)).

Die Schlupfüberwachungsfunktion beginnt dann, die Übersetzung ue so einzustellen, daß eine vorgegebene, sehr kleine Motordrehzahl und damit eine kleines Motormoment erreicht wird. Diese Übersetzungsänderung wird abgebrochen, sobald die dem Schlupf entsprechende Differenz Dv(t) einen zweiten Differenzgeschwindigkeitswert Dvzul2(SK((t)) unterschreitet: Dv(t) < Dvzul2(SK(t)). Ist diese Bedingung erfüllt, wird eine Haltezeit T4(SK(t)) gestartet, innerhalb der die Schlupfüberwachungsfunktion durch Erkennen von Schlupf erneut ausgelöst wird.

Die Schlupfüberwachungsfunktion endet, wenn sich das Fahrzeug im Zugbetrieb befindet, beschleunigt wird und die Haltezeit abgelaufen ist.

Weiterhin kann zum Abbau übermäßigen Radschlupfs innerhalb der Schlupfüberwachungsfunktion die steuerbare Anfahrkupplung 3 ganz oder teilweise geöffnet werden.

Ebenfalls vorgesehen sind Überwachungsfunktionen, um ein Überdrehen oder Abwürgen der Brennkraftmaschine zu verhindern.

Die Haltezeiten T1(SK(t)), T2(SK(t)), T3(SK(t)) und T4(SK(t))sind voneinander unabhängig und können wie auch der Fahrgeschwindigkeits-Grenzwert vg(ue, Sk(t), t) oder der übersetzungsabhängige Faktor k(ue, SK(t)) willkürlich einstellbar sein. Vorzugsweise werden sie zusammen mit einer Einstellung der Steuerkennlinien RKL(SK) (verbrauchsoptimiertes Fahrprogramm, Steuerkennlinie RKL1; leistungsoptimiertes Fahrprogramm, Steuerkennlinie RKL5) derart eingestellt, daß bei mehr leistungoptimierten Fahrprogrammen (Steuerkennlinie RKL5) die Haltezeiten T1(SK(t)), T2(SK(t))), T3(SK(t)), T4(SK(t)) und der Grenzwert vg(g, SK(t), t) größer werden, und der gangstufenabhängige Faktor k(g-1, SK(t)) und der zulässige Differenzgeschwindigkeitswert Dvzul(SK(t)) kleiner werden.

Sieht die Getriebesteuerung dagegen eine selbsttätige Anpassung der Steuerkennlinien (RKL(SK)) entsprechend der den Fahrstil des Fahrers oder dessen verkehrssituationsbedingtes Handeln in Bezug auf die Steuerung des Kraftfahrzeugs längerfristig bewertenden Fahraktivität (SK(t)) vor, so können die Haltezeiten T1(SK(t)), T2(SK(t)), T3(SK(t)), T4(SK(t), der Fahrgeschwindigkeits- Grenzwert vg(ue, Sk(t), t), der übersetzungsabhängige Faktor k(ue, SK(t)) oder der zulässige Differenzgeschwindigkeitswert Dvzul(SK(t)) auch direkt zum Teil oder insgesamt von der Fahraktivität SK(t) abhängen. Mit wachsender, mehr leistungsorientierter Fahraktivität SK(t) werden bevorzugt die Haltezeiten T1(SK(t)), T2(SK(t))), T3(SK(t)), T4(SK(t)) und der Grenzwert vg(g, SK(t), t) größer und der gangstufenabhängige Faktor k(g-1, SK(t)) und der zulässige Differenzgeschwindigkeitswert Dvzul(SK(t)) kleiner.

Das dargestellte Ausführungsbeispiel ist in analoger Weise auf ein Stufengetriebe zu übertragen. Anstelle der Steuerkennlinien RKL(SK) treten dann Schaltprogramme bzw. Schaltkennfelder.

An die Stelle der Übergangsfunktion tritt dann eine Schaltung um jeweils einen Gang mit anschließender Haltezeit, während der die Funktion, aus der heraus der Übergang stattfindet, erneut gestartet werden kann.

Bei einer Rückschaltung zur Erhöhung der Motorbremswirkung ist es über die genannten Bedingungen hinaus erforderlich, daß die zeitliche Änderung der Fahrgeschwindigkeit dv(t)/dt unterhalb des ersten negativen Längsbeschleunigungs- Grenzwerts albg(g, nmot) liegt, dv(t)/dt<albg(g, nmot), d.h. eine Mindest-Fahrzeugverzögerung erreicht wird. Hieraus wird der Fahrerwunsch nach verstärktem Verzögern des Fahrzeugs beziehungsweise nach einer Vergrößerung der Übersetzung (entsprechend einer Rückschaltung) abgeleitet.

Diese Funktion bewirkt eine Rückschaltung um einen Gang. Danach werden für eine Wartezeit T5(SK(t)) keine weiteren Rückschaltungen ausgeführt. Nach Ablauf der Wartezeit T5(SK(t)) wird die Schubfunktion aktiviert.

Die Schlupfüberwachungsfunktion wird mit den gleichen Kriterien ausgelöst, bewirkt jedoch neben der Öffnung einer Wandlerüberbrückungskupplung eine Hochschaltung um einen Gang mit anschließender Verhinderung von Schaltungen für eine Haltezeit T6(SK(t)). Während dieser Haltezeit T6(SK(t)) wird die Reaktion des Fahrzeuges auf die durchgeführten Maßnahmen überprüft; liegt nach Ablauf dieser Zeit noch immer Schlupf vor, so werden weitere Hochschaltungen mit erneuter Haltezeit ausgeführt.

Die übergeordneten Überwachungsfunktionen sind bei Stufengetrieben ebenfalls vorgesehen.

Hingegen ist nur bei stufenlosen Getrieben alternativ vorgesehen, anstelle der Konstanthaltung der Übersetzung diese mit geringer Geschwindigkeit zu verstellen. Der Stellvorgang kann über die Übersetzung ue oder die Motordrehzahl nmot(t) geregelt oder gesteuert werden, d.h. entweder die Uebersetzung ue oder die Motordrehzahl nmot(t) werden nach einer Sollkurve auf den durch den aktuellen Betriebspunkt vorgegebenen Wert gebracht.

## Patentansprüche

1. Verfahren zur Steuerung eines automatisch betätigten Getriebes (2) eines Kraftfahrzeugs, dessen als Brennkraftmaschine (4) ausgeführter Motor mittels eines Leistungssteuerorgans beeinflußbar ist, wobei die Übersetzung (ue) oder der Gang des Getriebes (2) mittelbar über wenigstens eine Kennlinie (RKLj) wenigstens in Abhängigkeit von der Stellung des Leistungssteuerorganes (alpha(t)) und der Motordrehzahl (nmot(t)) selbsttätig eingestellt wird, **dadurch gekennzeichnet,** daß die Übersetzung (ue) oder der Gang des Getriebes konstant gehalten wird, wenn eine zeitliche Änderung der Stellung des Leistungssteuerorganes (dalpha(t)/dt) einen negativen Grenzwert (-alphag) unterschreitet und wobei die Übersetzung oder der Gang konstant gehalten wird, bis eine nach dem Auftreten von Zugbetrieb beginnenden Haltezeit (T1(SK(t))) abgelaufen ist, wobei für den Fall, daß während des Ablaufs der Haltezeit (T1(SK(T))) erneut Schubbetrieb erkannt wird, die Übersetzung weiterhin konstant gehalten oder langsam verstellt wird, bis wiederum Zugbetrieb erkannt wird und die Haltezeit (T1(SK(t))) emeut verstrichen ist.

2. Verfahren nach Anspruche 1, **dadurch gekennzeichnet,** daß Schubbetrieb erkannt wird, wenn die Stellung des Leistungssteuerorganes (alpha(t)) unter eine motordrehzahlabhängige Grenzkennlinie (azsg(nmot)) fällt (alpha(t)<azsg(nmot)).

3. Verfahren nach Anspruche 1, **dadurch gekennzeichnet,** daß Zugbetrieb erkannt wird, wenn sowohl die Stellung des Leistungssteuerorganes (alpha(t)) die motordrehzahlabhängige Grenzkennlinie azsg(nmot) überschreitet (alpha(t)>azsg(nmot)), als auch die zeitliche Änderung der Fahrgeschwindigkeit (dv(t)/dt) positive Werte annimmt (alpha(t)>azsg(nmot) und dv(t)/dt>0).

4. Verfahren nach Anspruch 1, 2 oder 3, **dadurch gekennzeichnet, daß** nach Ablauf der Haltezeit (T1(SK(t))) eine Anpassung der Motordrehzahl an den Motordrehzahl-Sollwert durch Änderung der Übersetzung (ue) mit Hilfe einer Übergangsfunktion erfolgt.

5. Verfahren nach Anspruch 4, **dadurch gekennzeichnet, daß** die Übergangsfunktion ein Filter mit degressiven, linearen oder progressiven Charakter oder ein Verzögerungsglied erster oder zweiter Ordnung ist, dessen Parameter frei anpaßbar sind.

6. Verfahren zur Steuerung eines automatisch betätigten stufenlosen oder gestuften Getriebes (2) eines Kraftfahrzeugs, dessen als Brennkraftmaschine (4) ausgeführter Motor mittels eines Leistungssteuerorgans beeinflußbar ist, wobei die Übersetzung (ue) oder der Gang des Getriebes (2) mittelbar über wenigstens eine Kennlinie (RKLj) wenigstens in Abhängigkeit von der Stellung des Leistungssteuerorganes (alpha(t)) und der Motordrehzahl (nmot(t)) selbsttätig eingestellt wird, **dadurch gekennzeichnet,** daß
   - bei einem stufenlosen Getriebe bei Vorliegen der Bedingung 'Schubbetrieb und geringe Querbeschleunigung und ausreichender Abstand von der Haftreibungsgrenze und ausreichender Abstand von der Höchstgeschwindigkeit' eine Vergrößerung der Übersetzung bis zu einem fahrgeschwindigkeitsabhängigen Grenzwert, und anschließend an eine Wartezeit (T5(SK(t))) die Übersetzung so lange festgehalten wird, bis eine nach dem Auftreten von Zugbetrieb beginnende weitere Haltezeit (T1(SK(t))) abgelaufen ist, wobei für den Fall, daß während des Ablaufs der weiteren Haltezeit (T1(SK(T))) erneut Schubbetrieb erkannt wird, die Übersetzung weiterhin konstant gehalten oder langsam verstellt wird, bis wiederum Zugbetrieb erkannt wird und anschließend die weitere Haltezeit (T1(SK(t))) erneut verstrichen ist, und
   - bei einem gestuften Getriebe bei Vorliegen der Bedingung 'Schubbetrieb und geringe Querbeschleunigung und ausreichender Abstand von der Haftreibungsgrenze und ausreichender Abstand von der Höchstgeschwindigkeit' und der zusätzlichen Bedingung 'Erreichen einer Mindest-Verzögerung' eine Rückschaltung um einen Gang eingeleitet wird, und anschließend an eine Wartezeit (T5(SK(t))) der Gang solange festgehalten wird, bis eine nach dem Auftreten von Zugbetrieb beginnende weitere Haltezeit (T1(SK(t))) abgelaufen ist, wobei für den Fall, daß während des Ablaufs der weiteren Haltezeit (T1(SK(T))) erneut Schubbetrieb erkannt wird, der Gang weiterhin festgehalten wird, bis wiederum Zugbetrieb erkannt wird und die weitere Haltezeit (T1(SK(t))) erneut verstrichen ist.

7. Verfahren nach Anspruch 6, **dadurch gekennzeichnet, daß** nach der Wartezeit nur dann die Übersetzung oder der Gang konstant gehalten wird, wenn Bedingung 'Schubbetrieb und geringe Querbeschleunigung und ausreichender Abstand von der Haftreibungsgrenze und ausreichender Abstand von der Höchstgeschwindigkeit' und bei Stufengetrieben die zusätzlichen Bedingung 'Erreichen einer Mindest-Verzögerung' nicht mehr erfüllt ist.

8. Verfahren nach wenigstens einem der vorhergehenden Ansprüche, **dadurch gekennzeichnet, daß** die Differenz (Dv(t)) einer Fahrgeschwindigkeit (vref(t)) und einer an einer angetriebenen Achse ermittelten Geschwindigkeit (v(t)) stets überwacht wird, und bei Überschreiten eines zulässigen Differenzwertes (Dvzul1(t)) die Übersetzung so lange vergrößert oder so lange um jeweils einen Gang hochgeschaltet wird, bis die Differenz (Dv(t)) einen zweiten Differenzwert (Dvzul2(t)) unterschreitet.

**9.** Verfahren nach Anspruch 8, **dadurch gekennzeichnet, daß** gleichzeitig ein Kraftschluß zwischen Motor und Getriebe ganz oder teilweise unterbrochen wird.

**10.** Verfahren nach Anspruch 8 oder 9, **dadurch gekennzeichnet, daß** die Änderung der Übersetzung oder des Ganges beendet wird, wenn sich das Fahrzeug im Zugbetrieb befindet und beschleunigt wird.

**11.** Verfahren nach wenigstens einem der vorangehenden Ansprüch, **dadurch gekennzeichnet,** daß wenigstens eine der Haltezeiten oder einer der Grenzwerte oder einer der Vergleichswerte oder einer der Faktoren willkürlich einstellbar ist und vorzugsweise zusammen mit einer Einstellung der Kennlinien (RKLj) (verbrauchsoptimiertes Fahrprogramm, Steuerkennlinie RKL1; leistungsoptimiertes Fahrprogramm, Steuerkennlinie RKL5) derart eingestellt werden, daß bei mehr leistungoptimierten Fahrprogrammen (Steuerkennlinie RKL5) die Haltezeiten und die Grenzwerte größer werden und die Vergleichswerte oder die Faktoren kleiner werden.

**12.** Verfahren nach wenigstens einem der vorangehenden Ansprüche 1 bis 10, **dadurch gekennzeichnet**, daß wenigstens eine der Haltezeiten oder einer der Grenzwerte oder einer der Vergleichswerte oder einer der Faktoren von einer den Fahrstil des Fahrers oder dessen verkehrssituationsbedingtes Handeln in Bezug auf die Steuerung des Kraftfahrzeugs längerfristig bewertenden Fahraktivität (SK(t)) abhängig ist und mit wachsender, mehr leistungsorientierter Fahraktivität (SK(t)) die Haltezeiten und die Grenzwerte größer werden und die Vergleichswerte oder die Faktoren kleiner werden.

**13.** Verfahren nach Anspruch 12, **dadurch gekennzeichnet**, daß die Fahraktivität (SK(t)) durch eine den Fahrstil des Fahrers oder dessen verkehrsituationsbedingtes Handeln in Bezug auf die Steuerung des Kraftfahrzeugs längerfristig bewertenden funktionellen Zusammenhang (gleitende Mittelwertbildung) aus aktuellen und vergangenen Werten einer einzigen Betriebskenngröße oder einer zu einer einzigen aus mehreren Betriebskenngrößen eines Kraftfahrzeugs zusammengesetzten Größe ermittelt wird.

## Claims

**1.** Method of controlling an automatically operated gearbox (2) of a motor vehicle whose engine, designed as an internal combustion engine (4), can be influenced by means of a power control device, the gear ratio (ue) or the gear of the gearbox (2) being automatically set indirectly by means of at least one characteristic line (RKLj) at least as a function of the position of the power control device (alpha(t)) and of the engine speed (nmot(t)), characterized in that the gear ratio (ue) or the gear of the gearbox is kept constant if a change with respect to time of the position of the power control device (dalpha(t)/dt) is below a negative limit value (-alphag) and in which case the gear ratio or the gear is kept constant until a holding time (T1(SK(t))), which starts after the appearance of traction operation, has elapsed, and for the case where overrun operation is again detected during the course of the holding time (T1(SK(T))), the gear ratio continues to be kept constant or is slowly adjusted until traction operation is again detected and the holding time (T1(SK(t))) has again elapsed.

**2.** Method according to Claim 1, characterized in that overrun operation is detected if the position of the power control device (alpha(t)) falls below a limit characteristic line (azsg(nmot)) which depends on engine speed (alpha(t)<azsg(nmot)).

**3.** Method according to Claim 1, characterized in that traction operation is detected both if the position of the power control device (alpha(t)) exceeds the limit characteristic line azsg(nmot) which is dependent on engine speed (alpha(t)>azsg(nmot)), and if the change with respect to time in the driving speed (dv(t)/dt) assumes positive values (alpha(t)>azsg(nmot) and dv(t)/dt>0).

**4.** Method according to Claim 1, 2 or 3, characterized in that, after the holding time (T1(SK(t))) has elapsed, the engine speed is adjusted to the engine speed prescribed value by changing the gear ratio (ue) with the aid of a transition function.

**5.** Method according to Claim 4, characterized in that the transition function is a filter having a degressive, linear or a first- or second-order delay element whose parameters are freely adjustable.

**6.** Method of controlling an automatically operated, continuous or stepped gearbox (2) of a motor vehicle whose engine, which is designed as internal combustion engine (4) can be influenced by means of a power control device, the gear ratio (ue) or the gear of the gearbox (2) being automatically set indirectly by means of at least one characteristic line (RKLj) at least as a function of the position of the power control device (alpha(t)) and the engine speed (nmot(t)), characterized in that

- in the case of a continuous gearbox, if the condition 'overrun operation and low transverse acceleration and adequate separation from the static friction limit and adequate separation from the maximum speed' prevails, the gear ratio is increased up to a limit value which is dependent on the driving speed and, subsequent to a waiting time (T5(SK(t))), the gear ratio is maintained until a further holding time (T1(SK(t))), which starts after the appearance of traction operation, has elapsed, and for the case where overrun operation is again detected during the course of the further holding time (T1(SK(T))), the gear ratio continues to be kept constant or is slowly adjusted until traction operation is again detected and the further holding time (T1(SK(t))) has again elapsed, and

- in the case of a stepped gearbox, if the condition 'overrun operation and low transverse acceleration and adequate separation from the static friction limit and adequate separation from the maximum speed' and the additional condition 'achievement of a minimum delay' prevails, a change down by one gear is initiated and, subsequent to a waiting time (T5(SK(t))), the gear is maintained until a further holding time (T1(SK(t))), which starts after the appearance of traction operation, has elapsed, and for the case where overrun operation is again detected during the course of the further holding time (T1(SK(T))), the gear continues to be maintained until traction operation is again detected and the further holding time (T1(SK(t))) has again elapsed.

7. Method according to Claim 6, characterized in that, after the waiting time, the gear ratio or the gear is kept constant only if the condition 'overrun operation and low transverse acceleration and adequate separation from the static friction limit and adequate separation from the maximum speed' and, in the case of stepped gearboxes, the additional condition 'achievement of a minimum delay' are no longer fulfilled.

8. Method according to at least one of the preceding claims, characterized in that the difference (Dv(t)) between a driving speed (vref(t)) and a speed (v(t)) measured on a driven axle is constantly monitored and, if a permissible difference value (Dvzul1(t)) is exceeded, the gear ratio is increased, or changing up by one gear in each case is continued, until the difference (Dv(t)) falls below a second difference value (Dvzul2(t)).

9. Method according to Claim 8, characterized in that a frictional connection between engine and gearbox is completely or partly interrupted at the same time.

10. Method according to Claim 8 or 9, characterized in that the change in the gear ratio or of the gear is terminated if the vehicle is in traction operation and is accelerated.

11. Method according to at least one of the preceding claims, characterized in that at least one of the holding times or one of the limit values or one of the comparison values or one of the factors can be randomly adjusted and preferably adjusted together with the adjustment of the characteristic line (RKLj) (consumption-optimized driving program, control characteristic line RKL1; power-optimized driving program, control characteristic line RKL5) in such a way that, in the case of more power-optimized driving programs (control characteristic line RKL5), the holding times and the limit values become greater and the comparison values or the factors become smaller.

12. Method according to at least one of the preceding Claims 1 to 10, characterized in that at least one of the holding times or one of the limit values or one of the comparison values or one of the factors is dependent on a driving activity (SK(t)) which assesses in the longer term the driving style of the driver or his behaviour, associated with the traffic situation, in relation to the control of the motor vehicle and with growing, more performance-oriented driving activity (SK(t)), the holding times and the limit values become greater and the comparison values or the factors become smaller.

13. Method according to Claim 12, characterized in that the driving activity (SK(t)) is determined by a functional interrelationship (sliding averaging) which assesses in the longer term the driving style of the driver or his behaviour, associated with the traffic situation, in relation to the control of the motor vehicle from current and past values of a single characteristic operating variable or variable combined to form a single variable from a plurality of characteristic operating variables of a motor vehicle.

**Revendications**

1.  Procédé de commande d'une boîte de vitesses (2) automatique d'un véhicule automobile, dont le moteur, réalisé sous la forme d'un moteur à combustion interne (4), peut être influencé au moyen d'un organe de commande de puissance, dans lequel le rapport de transmission (ue), ou le rapport de vitesse de la boîte (2), est réglé automatiquement, indirectement par au moins une courbe caractéristique (RKLj) au moins en fonction de la position de l'organe de commande de puissance (alpha(t)) et de la vitesse de rotation du moteur (nmot(t)), caractérisé en ce que le rapport de transmission (ue), ou le rapport de vitesse de la boîte, est maintenue constant, lorsqu'une variation dans le temps de la position de l'organe de commande de puissance (dalpha(t)/dt) passe au-dessous d'une valeur limite négative (-alphag) et en ce que le rapport de transmission ou la vitesse est maintenue constante, jusqu'à ce qu'un temps de maintien (T1(SK(t))), commençant après apparition du fonctionnement en traction, soit écoulé, dans le cas où, pendant l'écoulement du temps de maintien (T1(SK(T))) un freinage moteur est à nouveau détecté, le rapport de transmission continuant d'être maintenu constant ou étant lentement modifié, jusqu'à ce qu'à nouveau le fonctionnement en traction soit détecté et le temps de maintien (T1(SK(t))) à nouveau écoulé.

2.  Procédé selon la revendication 1, caractérisé en ce que le freinage moteur est détecté lorsque la position de l'organe de commande de puissance (alpha(t)) passe au-dessous d'une courbe caractéristique limite (azsg(nmot)) dépendant de la vitesse de rotation du moteur (alpha(t)<azsg(nmot)).

3.  Procédé selon la revendication 1, caractérisé en ce que le fonctionnement en traction est détecté lorsque la position de l'organe de commande de puissance (alpha(t)) dépasse la courbe caractéristique limite azsg(nmot) dépendant de la vitesse de rotation du moteur (alpha(t)>azsg(nmot)) et lorsque la variation dans le temps de la vitesse de marche (dv(t)/dt) prend des valeurs positives (alpha(t)>azsg(nmot) et dv(t)/dt>0).

4.  Procédé selon les revendications 1, 2 ou 3, caractérisé en ce qu'à l'expiration du temps de maintien (T1(SK(t))), il se produit une adaptation de la vitesse de rotation du moteur à la vitesse de consigne de celle-ci par variation du rapport de transmission (ue) à l'aide d'une fonction de transition.

5.  Procédé selon la revendication 4, caractérisé en ce que la fonction de transition est un filtre à caractère dégressif, linéaire ou progressif ou un organe de temporisation de premier ou de second ordre dont les paramètres peuvent être librement adaptés.

6.  Procédé de commande d'une boîte de vitesses (2) automatique, continue ou non, d'un véhicule automobile, dont le moteur, réalisé sous la forme d'un moteur à combustion interne (4), peut être influencé au moyen d'un organe de commande de puissance, le rapport de transmission (ue) ou la vitesse de la boîte (2) est réglé automatiquement, indirectement par au moins une courbe caractéristique (RKLj) au moins en fonction de la position de l'organe de commande de puissance (alpha(t)) et de la vitesse de rotation du moteur (nmot(t)), caractérisé en ce que
    - dans le cas d'une boîte de vitesses continue, en présence de la condition "freinage moteur et faible accélération transversale et écart suffisant de la limite d'adhérence et écart suffisant de la vitesse maximale" une augmentation du rapport de transmission jusqu'à une valeur limite dépendant de la vitesse de marche et, à la suite d'un temps d'attente (T5(SK(t))), le rapport de transmission sont maintenus jusqu'à ce qu'un autre temps de maintien (T1(SK(t))), commençant après l'apparition du fonctionnement en traction, se soit écoulé, dans le cas où pendant l'écoulement du temps de maintien (T1(SK(T))) un freinage moteur est à nouveau détecté, le rapport de transmission continuant d'être maintenu constant ou étant lentement modifié jusqu'à ce qu'à nouveau le fonctionnement en traction soit détecté et le temps de maintien (T1(SK(t))) à nouveau écoulé, et
    - dans le cas d'une boîte de vitesses en paliers, en présence de la condition "freinage moteur et faible accélération transversale et écart suffisant de la limite d'adhérence et écart suffisant de la vitesse maximale" et de la condition supplémentaire "obtention d'une temporisation minimale", le passage au rapport de vitesse inférieur est amorcé et, à la suite d'un temps d'attente (T5(SK(t))), le rapport de vitesse est maintenu jusqu'à ce qu'un autre temps de maintien (T1(SK(t))), commençant après l'apparition du fonctionnement en traction, se soit écoulé, dans le cas où, pendant l'écoulement de l'autre temps de maintien (T1(SK(T))), il est à nouveau détecté un freinage moteur, le rapport de vitesse continuant d'être maintenu jusqu'à ce que le fonctionnement en traction soit à nouveau détecté et l'autre temps d'attente (T1(SK(t))) soit à nouveau écoulé.

7. Procédé selon la revendication 6, caractérisé en ce qu'après le temps d'attente seul le rapport de transmission ou le rapport de vitesse est maintenu constant, si la condition "freinage moteur et faible accélération transversale et écart suffisant de la limite d'adhérence et écart suffisant de la vitesse maximale" et dans le cas de boîtes de vitesses à paliers de vitesses, la condition supplémentaire "obtention d'une temporisation minimale", ne sont plus satisfaites.

8. Procédé selon l'une au moins des revendications précédentes, caractérisé en ce que la différence (Dv(t)) d'une vitesse de marche (vref(t)) et d'une vitesse (v(t)), déterminée sur un essieu entraîné, est constamment contrôlée, et dans le cas d'un dépassement d'une valeur différentielle admissible (Dvzul1(t)), le rapport de transmission est augmenté ou il est passé au rapport de vitesse supérieur jusqu'à ce que la différence (Dv(t)) passe au-dessous d'une seconde valeur différentielle (Dvzul2(t)).

9. Procédé selon la revendication 8, caractérisé en ce que simultanément un accouplement par force entre le moteur et la boîte de vitesses est totalement ou partiellement interrompu.

10. Procédé selon les revendications 8 ou 9, caractérisé en ce que la variation du rapport de transmission, ou du rapport de vitesse est terminée, lorsque le véhicule se trouve en fonctionnement en traction et est accéléré.

11. Procédé selon l'une au moins des revendications précédentes, caractérisé en ce que l'un au moins des temps de maintien ou l'une des valeurs limites ou l'une des valeurs comparatives ou l'un des facteurs est volontairement réglable et de préférence réglé avec un réglage des courbes caractéristiques (RKLj) (programme de marche optimisé quant à la consommation, courbe caractéristique de commande RKL1 ; programme de marche optimisé quant à la puissance, courbe caractéristique de commande (RKL5), de manière que dans le cas de plusieurs programmes de marche optimisés quant à la puissance (courbe caractéristique de commande RKL5), les temps de maintien et les valeurs limites augmentent et les valeurs comparatives ou les facteurs diminuent.

12. Procédé selon l'une au moins des revendications 1 à 10 précédentes, caractérisé en ce que l'un au moins des temps de maintien ou l'une des valeurs limites ou l'une des valeurs comparatives ou l'un des facteurs dépend d'une activité de conduite (SK(t)), traduisant à long terme le style de conduite du conducteur ou son action, conditionnée par la circulation, en ce qui concerne la commande du véhicule, et, lorsque l'activité de conduite (SK(t)), plus orientée vers la puissance, augmente, les temps de maintien et les valeurs limites augmentent et les valeurs comparatives ou les facteurs diminuent.

13. Procédé selon la revendication 12, caractérisé en ce que l'activité de conduite (SK(t)) est déterminée par une relation fonctionnelle (formation d'une valeur moyenne glissante), traduisant à long terme le style de conduite du conducteur ou son action, conditionnée par la circulation, en ce qui concerne la commande du véhicule, relation constituée de valeurs actuelles et passées d'une unique grandeur caractéristique de fonctionnement ou d'une grandeur composée de plusieurs grandeurs caractéristiques de fonctionnement d'un véhicule automobile, pour donner une grandeur caractéristique de fonctionnement unique.

FIG.1

FIG.2

□ RKL1(SKmin)  ○RKL2  ◇RKL3  △RKL4  ×RKL5 (SKmax)

alpha[%]

n mots [1000/min]

FIG.3

EP 0 588 896 B1

aq [g (9,81m/sec)]

0,4

0,3

aqg 1

0,2

0,1

aqg 2

FIG.4

50    100    150    200    v [km/h]

[s]    T1(SK(t)), T2(SK(t)), T3(SK(t)), T4(SK(t)),
       T5(SK(t)), Th(SK(t))

3

T1,T2,T3,T4,T5

2

Th

1

FIG.7

SKmin                    SKmax    SK(t)

FIG.5

□ ue = 2,48     + ue = 1,48     ◇ ue = 1,0     △ ue = 0,73

EP 0 588 896 B1

FIG.6

k (ue, SK(t))=
F (ue, SK (t))

□ ue = 2,48    + ue = 1,48    ◇ ue = 1,0    △ ue = 0,73

SK min    SK max

$\overline{SK(t)}$

EP 0 588 896 B1